# EUROPÄISCHE PATENTANMELDUNG

(11) **EP 1 493 323 A1**
(43) Veröffentlichungstag der Anmeldung: **05.01.2005**
(21) Anmeldenummer: 04015479.1
(22) Anmeldetag: 01.07.2004
(51) Int. Cl.: A01D 78/10

(54) **Heuwerbungsmaschine**

(30) Priorität: 04.07.2003 DE 10330380
(71) Anmelder: Maschinenfabrik Bernard Krone GmbH, 48480 Spelle (DE)
(72) Erfinder: Krone, Bernard, Dr.-Ing. E.h., 48480 Spelle (DE); Leifeling, Karl, Dipl.-Ing., 48477 Hörstel-Bevergern (DE); Spree, Christian, Dipl.-Ing., 49584 Fürstenau (DE)

(57) **Zusammenfassung**

Die Erfindung bezieht sich auf eine Heuwerbungsmaschine (1), insbesondere zum Zetten und Wenden von Halmgut mit an Maschinenbalken (7, 8) angeordneten, über Stützräder (13) auf dem Boden abstützbaren sowie um jeweils eine im wesentlichen vertikal ausgerichtete Achse in Rotationsbewegungen versetzbaren Arbeitskreiseln (12), wobei seitliche Maschinenbalken (7, 8) um jeweils eine im wesentlichen vertikal ausgerichtete Schwenkachse (11) aus einer sich beispielsweise quer zur Arbeitsfahrtrichtung erstreckenden Arbeitsstellung in eine in etwa parallel zur Arbeitsfahrtrichtung verschwenkte Transportstellung überführbar sind. Diese Heuwerbungsmaschine zeichnet sich dadurch aus, daß sämtliche Arbeitskreisel (12) an den beiden seitlichen Maschinenbalken (7, 8) angeordnet sind und die Lage der Schwenkachsen (11) der beiden seitlichen Maschinenbalken (7, 8) so gewählt ist, daß ein Abstandsmaß (A) zwischen den inneren Arbeitskreiseln (12) in der Arbeitsstellung sich bei der Überführung der seitlichen Maschinenbalken (7, 8) in die Transportstellung vergrößert.

## Beschreibung

Die Erfindung bezieht sich auf eine Heuwerbungsmaschine, insbesondere zum Zetten und Wenden von Halmgut mit an Maschinenbalken angeordneten, über Stützräder auf dem Erdboden abstützbaren sowie um jeweils eine im wesentlichen vertikal ausgerichtete Achse in Rotationsbewegungen versetzbaren Arbeitskreiseln, wobei seitliche Maschinenbalken um jeweils eine im wesentlichen vertikal ausgerichtete Schwenkachse aus einer sich beispielsweise quer zur Arbeitsfahrtrichtung erstreckenden Arbeitsstellung in eine in etwa parallel zur Arbeitsfahrtrichtung verschwenkte Transportstellung überführbar sind.

Eine Maschine der vorstehend genannten Art ist beispielsweise aus der DE 37 17 307 A1 bekannt. Bei dieser Heuwerbungsmaschine sind insgesamt sechs Arbeitskreisel vorgesehen, wobei zunächst zwei innere Arbeitskreisel einem zentralen mittleren Maschinenbalken und jeweils zwei weitere Kreiselrechen an seitlichen Maschinenbalken abgestützt sind. Die seitlichen Maschinenbalken sind um vertikal ausgerichtete Schwenkachsen in eine fahrtrichtungsparallele Transportstellung nach hinten hin aus ihrer Arbeitsstellung zu verschwenken. Die Schwenkachsen haben zueinander ein Abstandsmaß, das deutlich größer ist als das Abstandsmaß von zwei einander gegenüberliegend angeordneten Arbeitskreiseln quer zur Transportfahrrichtung in der Transportstellung. Das Abstandsmaß der am mittleren nicht verschwenkbaren Maschinenbalken angeordneten Arbeitskreisel ist kleiner als das vorgenannte Abstandsmaß der gegenüberliegend in der Transportstellung angeordneten Arbeitskreisel, so daß die maximale Maschinenbreite in der Transportstellung durch die Arbeitskreisel der verschwenkbaren seitlichen Maschinenbalken bestimmt wird. Die Arbeitskreisel überlappen sich dabei in Teilbereichen ihrer Durchmesser, wobei die vorderen Arbeitskreisel der verschwenkbaren seitlichen Maschinenbalken die nicht verschwenkbaren inneren Arbeitskreisel in der Transportstellung bis nahe an deren Rotationsachsen überlappen, so daß die Laufräder eines Arbeitskreisels eines verschwenkbaren seitlichen Maschinenbalkens deutlich in den Wirkbereich eines Arbeitskreisels eines mittleren Maschinenbalkens hineinragen. Dies schafft erhebliche Probleme bei der Überführung der seitlichen Maschinenbalken in ihre Transportstellung, so daß in der Praxis die Abstände der Schwenkachsen zueinander derart groß gewählt werden müssen, daß eine Behinderung der mittleren Kreiselrechen nicht zu befürchten ist. Das wirkt sich nachteilig auf die erreichbare maximale Transportbreite der Maschine aus.

Es ist Aufgabe der vorliegenden Erfindung, eine Heuwerbungsmaschine der eingangs genannten Art zu schaffen, bei der auch bei großer Arbeitsbreite der Maschine seitliche Maschinenbalken sicher in ihre annähernd parallele Transportstellung zu überführen sind und verschwenkbare Teile der Maschine andere Teile nicht behindern.

Zur Lösung dieser Aufgabe zeichnet sich die Heuwerbungsmaschine der eingangs genannten Art dadurch aus, daß sämtliche Arbeitskreisel an den beiden seitlichen Maschinenbalken angeordnet sind und die Lage der Schwenkachsen der beiden seitlichen Maschinenbalken so gewählt ist, daß ein Abstandsmaß zwischen den inneren Arbeitskreiseln in der Arbeitsstellung sich bei der Überführung der seitlichen Maschinenbalken in die Transportstellung vergrößert.

Durch diese Positionierung der Schwenkachsen der beiden seitlichen Maschinenbalken zueinander und die Anordnung der Arbeitskreisel an allein den seitlichen, in ihre Transportstellung verschwenkbaren Maschinenbalken ist der Freiraum für das jeweilige Stützrad unter dem jeweiligen Arbeitskreisel optimal zu nutzen und darüber hinaus sind die Fahreigenschaften der Maschine wesentlich zu optimieren. Das Überlappungsmaß von Arbeitskreiseln ist insgesamt vergleichmäßigt, so daß konstruktiv keine besonderen Anforderungen in vorderen Bereichen eines seitlichen Maschinenbalkens für die dortigen Arbeitskreisel und deren Laufräder vorzusehen sind. Die Laufräder können gelenkt ausgebildet werden, da ein hinreichender Freiraum zur Verfügung steht. Damit ist auch die Überführung der Maschinenbalken bzw. deren Arbeitskreisel aus einer Arbeitsstellung in eine Transportstellung wesentlich vereinfacht.

Durch eine erhöhte Anzahl von Arbeitskreiseln mit jeweils geringerem Kreiseldurchmesser sind pro Kreisel geringere Mengen von Halmgut zu verarbeiten, wodurch sich die Qualität insbesondere auch von zu Futtermittel zu verarbeitendem Halmgut verbessern lässt. Durch den geringen Kreiseldurchmesser ist darüber hinaus der Streuwinkel positiv beeinflusst und die Menge nicht aufgenommenen Halmguts deutlich verringert. Solche kleineren Arbeitskreiseldurchmesser lassen sich besonders gut realisieren, wenn die Lage der vertikalen Schwenkachsen der beiden seitlichen Maschinenbalken so gewählt ist, dass das Abstandsmaß A zwischen den inneren Arbeitskreiseln in der Arbeitsstellung sich bei der Überführung der seitlichen Maschinenbalken in die Transportstellung vergrößert.

Das Abstandsmaß A zwischen den Vertikalmittelachsen der beiden in Arbeitsstellung inneren Arbeitskreiseln ist in der Transportstellung vergrößert. Bevorzugtermassen ist hier ein Abstandsmaß A in der Transportstellung vorgesehen, das 110 bis 130 % des Abstandsmaßes A in der Arbeitsstellung beträgt. Damit lässt sich der Freiraum unterhalb der Arbeitskreisel für ein Stützrad optimal nutzen. Zudem sind die Fahreigenschaften optimiert.

Wesentliche weitere Ausgestaltungen der Erfindung ergeben sich aus weiteren Unteransprüchen, der nachfolgenden Beschreibung und der Zeichnung. In der Zeichnung zeigen:
- Figur 1:: Eine Draufsicht auf ein Ausführungsbeispiel einer Heuwerbungsmaschine nach der Erfindung,

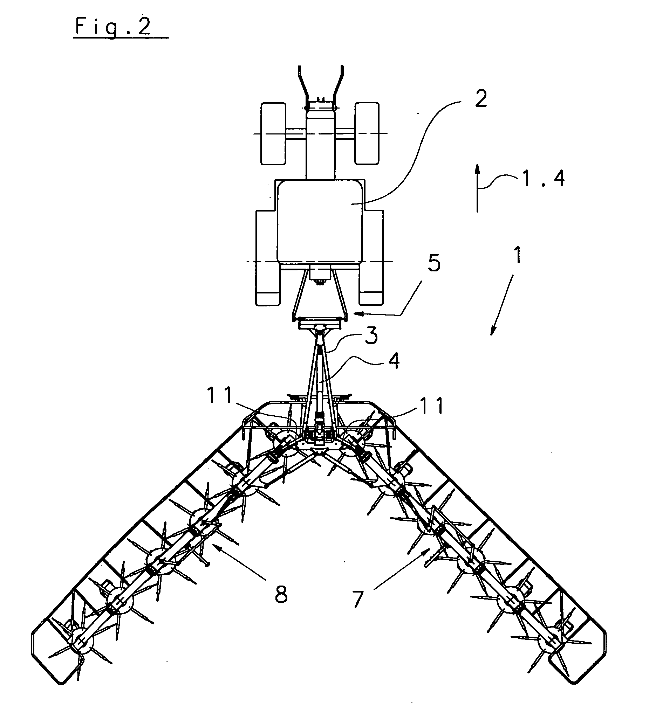

- Figur 2:: eine Draufsicht auf das Ausführungsbeispiel nach Figur 1 während der Überführung von seitlichen Maschinenbalken in die Transportstellung,
- Figur 3:: eine Draufsicht auf das Ausführungsbeispiel nach den Figuren 1 und 2 in der Transportstellung der Maschine,
- Figur 4:: eine perspektivische Darstellung des Ausführungsbeispiels nach Figur 1 in einer Arbeitsstellung der seitlichen Maschinenbalken, die sich quer zur Fahrtrichtung erstrecken, und
- Figur 5:: eine perspektivische Teilansicht auf in Transportstellung verschwenkte Seitenmaschinenbalken in vergrößerter Darstellung und
- Figur 6:: ausschnittsweise eine Draufsicht auf in die Transportstellung verschwenkten seitlichen Maschinenbalken mit zugeordneten Arbeitskreiseln

In der Zeichnung sind grundsätzlich gleichwirkende Teile mit übereinstimmenden Bezugsziffern bezeichnet. Allgemein mit 1 ist in der Zeichnung die Heuwerbungsmaschine zum Zetten und Wenden von Halmgut beziffert, die in dem dargestellten Ausführungsbeispiel von einem landwirtschaftlichen Schlepper 2 gezogen und dort über eine Deichseleinrichtung 3 sowie eine Gelenkwelle 4 mit den üblichen Koppelpunkten 5 des Schleppers 2 verbunden ist.

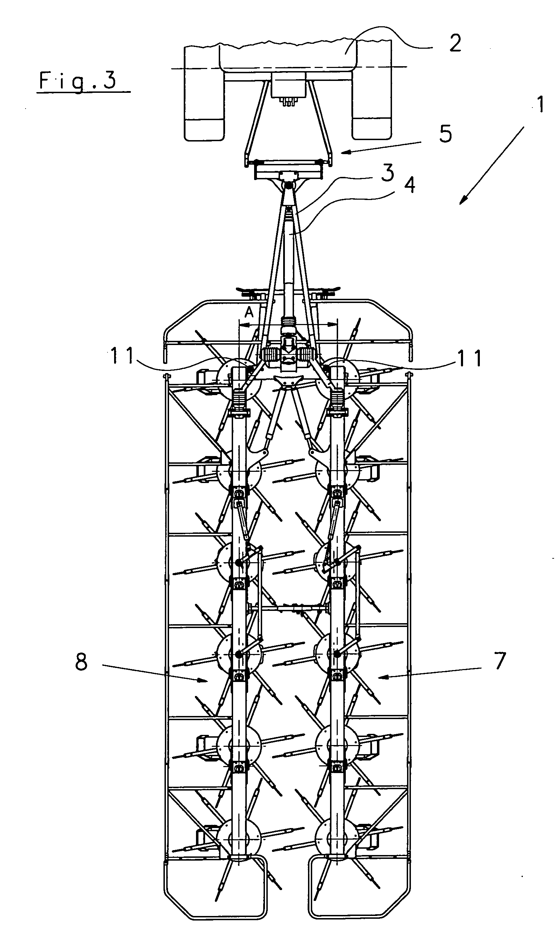

Die Heuwerbungsmaschine 1 hat einen zentralen mittleren Maschinenbalken 6 sowie links und recht von diesem allgemein mit 7 und 8 bezifferte seitliche Maschinenbalken, die in Einzelmaschinenbalken 7.1, 7.2, 7.3, 7.4 und 7.5 bzw. 8.1, 8.2, 8.3, 8.4 sowie 8.5 aufgeteilt sind und zwischen benachbarten Einzelbalken jeweils im wesentlichen horizontal ausgerichtete Schwenkachsen 9 bzw. 10 haben. Über im wesentlichen vertikal ausgerichtete Schwenkachsen 11, sind die seitlichen Maschinenbalken in ihre aus der Figur 3 ersichtliche Transportstellung zu überführen.

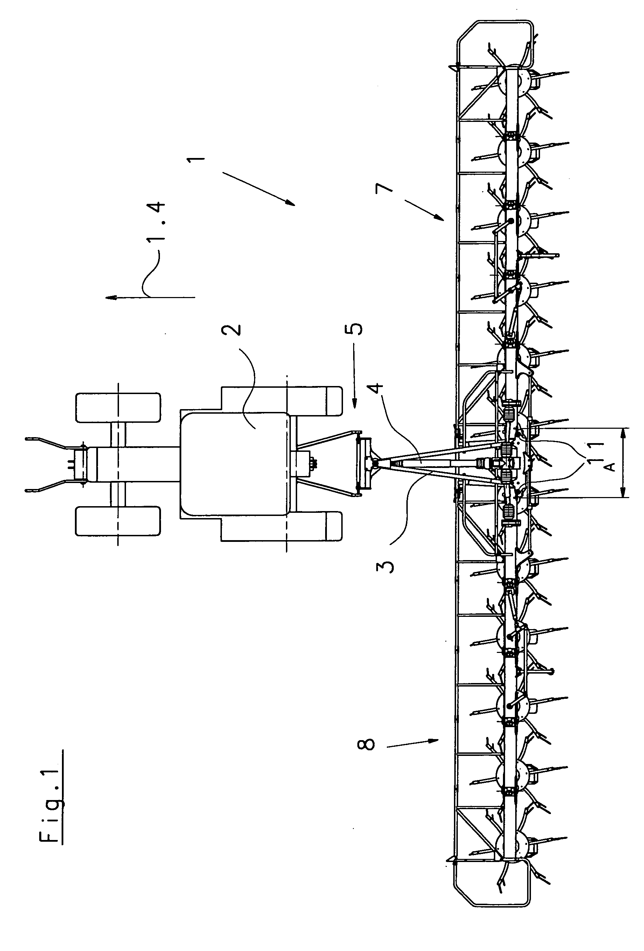

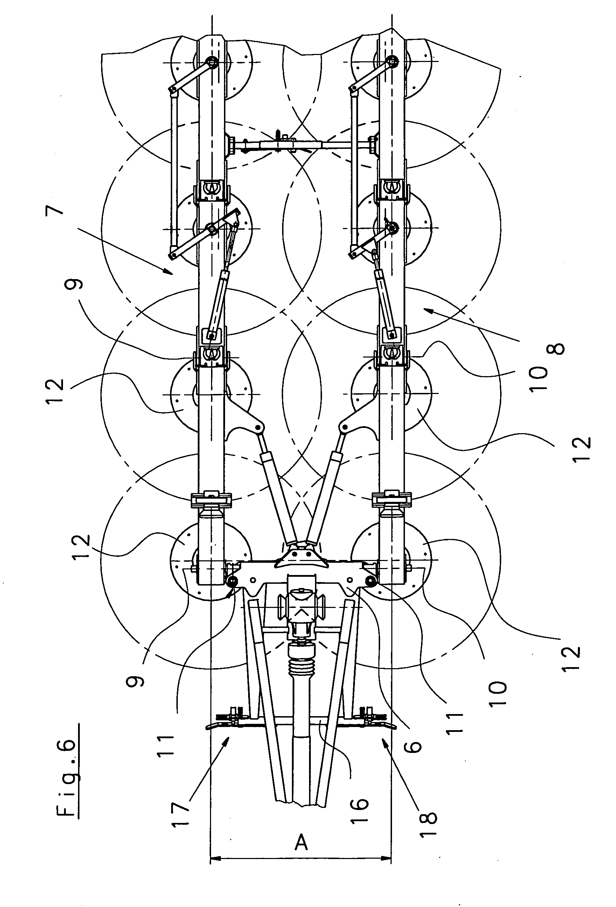

Das Abstandsmaß A zwischen den Vertikalmittelachsen der beiden in Arbeitsstellung inneren Arbeitskreiseln 12 (Fig.1) ist in der Transportstellung (Fig. 3, 6) vergrößert. Bevorzugtermassen ist hier ein Abstandsmaß A in der Transportstellung vorgesehen, das 110 bis 130 % des Abstandsmaßes A in der Arbeitsstellung beträgt. Damit lässt sich der Freiraum unterhalb der Arbeitskreisel 12 für ein Stützrad 13 optimal nutzen. Zudem sind die Fahreigenschaften optimiert.

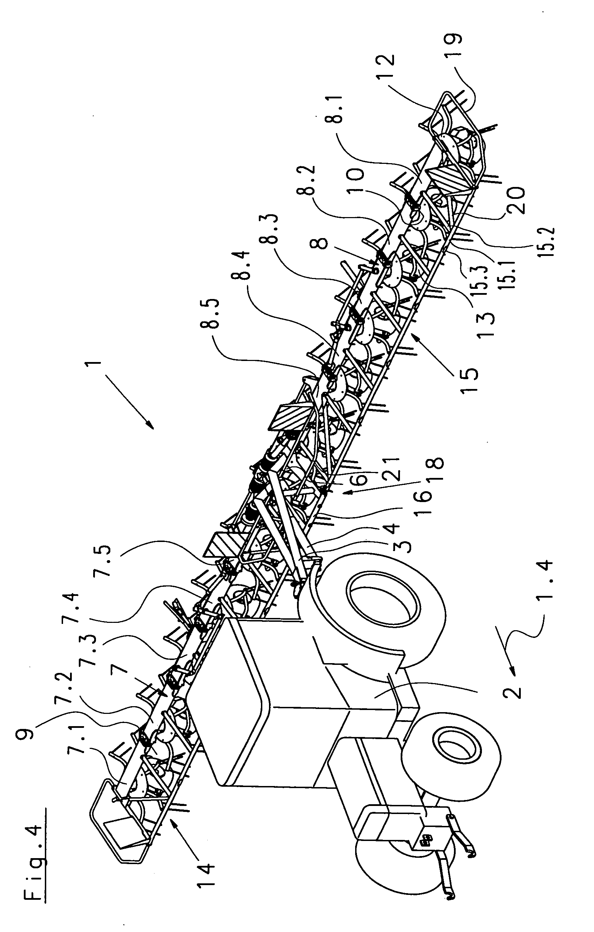

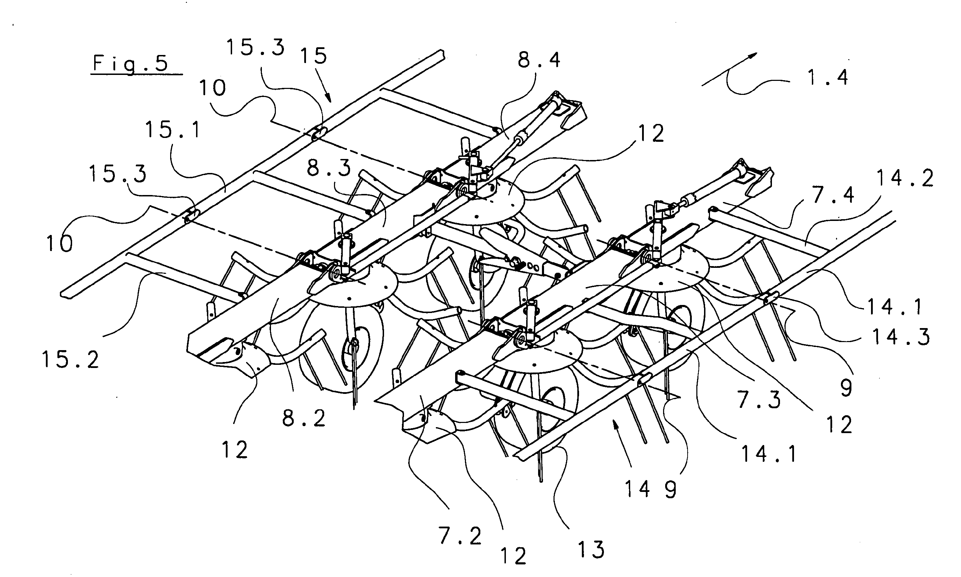

An den seitlichen Maschinenbalken 7 und 8 sind sämtliche Arbeitskreisel 12 der Maschine abgestützt. Über Laufräder 13 (siehe auch Figur 4) sind die Maschinenbalken auf dem Erdboden abstützbar. In Arbeitsfahrtrichtung 1.4 sind sämtlichen Maschinenbalken 6, 7 und 8 Rahmenteile vorgeordnet, und zwar dem Maschinenbalken 7 ein Rahmenteil 14, dem Maschinenbalken 8 ein Rahmenteil 15 und dem zentralen Maschinenbalken 6 ein Rahmenteil 16. Über Trennstellen 17 und 18 sind diese seitlichen Rahmen 14 und 15 mit dem zentralen Rahmenteil 16 zu verbinden und von diesem wieder zu entfernen, so daß die seitlichen Rahmenteile 14 und 15 in die aus Figur 3 ersichtliche Transportstellung zu bringen sind. An den jeweiligen äußeren Endbereichen der Maschinenbalken 7 und 8 sind die Arbeitskreisel 12 noch übergreifende Rahmenseitenenden 19 vorgesehen. Wie im einzelnen auch näher aus Figur 5 hervorgeht, haben die Rahmenteile 14 bzw. 15 eine vordere durchgehende Längsstrebe 15.1 bzw. 14.1, die über Querstreben 15.2 mit dem jeweiligen seitlichen Maschinenbalken 7 bzw. 8 verbunden sind. Die vorderen Streben 15.1 bzw. 14.1 haben auch jeweils gelenkige Trennstellen 15.3, die sich koaxial zu den Trennstellen am Maschinenbalken 7 bzw. 8 erstrecken und mithin übereinstimmende Schwenkachsen 9 bzw. 10 haben. Damit können die vorderen Rahmenstreben 14.1, 15.1 Höhenausgleichsbewegungen der einzelnen Einzelmaschinenbalken folgen.

Im mittleren Zentralbereich, also dem Maschinenbalken 6 vorgeordnet, ist ein feststehendes Rahmenteil 16 mit seitlichen Trennstellen 18 bzw. 17 vorgesehen, an denen ein Schloss bzw. eine sonstige Verriegelungseinheit zur Aufnahme der seitlichen Rahmenteile 14 und 15 in der in der Figur 1 und der Figur 4 dargestellten Arbeitsstellung der Teile vorgesehen ist. Über diese Trennstellen bzw. die Verriegelungs- und Schlosseinheiten sind die seitlichen Rahmenteile 14 und 15 derart an den mittleren zentralen Rahmenteilbereich anzukoppeln, daß dadurch in der Arbeitsstellung der Teile ein durchgehendes, fest miteinander verbundenes Zugstangenelement dargestellt wird, das der Heuwerbungsmaschine während der Arbeitsfahrt auch bei sehr großer Arbeitsbreite mit z. B. zwölf Arbeitskreiseln die notwendige Arbeitsfahrtstabilität verleiht. In einigen der durch die Querstreben 14.2 bzw. 15.2 zusammen mit den vorderen Rahmenräumen 14.1 bzw. 15.1 gebildeten Feldern sind noch besondere Stabilisierungsmaßnahmen vorgesehen, indem benachbarte Querstreben 15.2 bzw. 14.2 durch Stabilisierungselemente 20 miteinander verbunden sind. Im skizzierten Ausführungsbeispiel ist den jeweils inneren Einzelmaschinenbalken 7.5 bzw. 8.5 und den jeweils außen liegenden äußeren Einzelmaschinenbalken 7.1 bzw. 8.1 ein derartiges Stabilisierungselement 20 zugeordnet, und zwar in dem skizzierten Ausführungsbeispiel als Diagonalstrebe, so daß insgesamt eine Fachwerkausbildung bei den jeweiligen seitlichen Rahmenteilen 14 bzw. 15 vorliegt. Anstelle der Diagonalstrebe können auch sonstige Stabilisierungselemente wie plattenförmige Elemente, einander kreuzende Stützen, Stahlseile oder dgl. vorgesehen sein, um sicher auftretende Kräfte auf benachbarte Querstreben bzw. vordere Rahmenstreben zu übertragen. Es ist ebenfalls möglich, jedes Feld mit einem entsprechenden Stabilisierungselement im Bedarfsfall auszustatten.

Um in der Transportstellung auch nach vorne hin einen Schutzrahmen vorliegen zu haben, ist noch ein vorderer übergreifender Vorderrahmen 21 in Gestalt eines Korbes vorgesehen. Bei dem skizzierten Ausführungsbeispiel sind sämtliche Arbeitskreisel 12 an den seitlichen Maschinenbalken 7 bzw. 8 angeordnet, so daß der vordere zentrale Maschinenbalken 6 keine Arbeitskreisel 12 trägt, sondern den zentralen mit den Trennstellen versehenen Zentralrahmen 16 aufweist. In dem skizzierten Ausführungsbeispiel ist die Maschine mit insgesamt zwölf Arbeitskreiseln ausgestattet. Es ist jedoch auch eine andere Anzahl von Arbeitskreiseln möglich. Ebenfalls ist möglich, durch die enorm stabilisierende Wirkung der Rahmenteile als durchgehendes Zugstangenelement auch mehr als zwölf Arbeitskreisel vorzusehen.

## Patentansprüche

1. Heuwerbungsmaschine (1), insbesondere zum Zetten und Wenden von Halmgut mit an Maschinenbalken (7, 8) angeordneten, über Stützräder (13) auf dem Boden abstützbaren sowie um jeweils eine im wesentlichen vertikal ausgerichtete Achse in Rotationsbewegungen versetzbaren Arbeitskreiseln (12), wobei seitliche Maschinenbalken (7, 8) um jeweils eine im wesentlichen vertikal ausgerichtete Schwenkachse (11) aus einer sich beispielsweise quer zur Arbeitsfahrtrichtung erstreckenden Arbeitsstellung in eine in etwa parallel zur Arbeitsfahrtrichtung verschwenkte Transportstellung überführbar sind, **dadurch gekennzeichnet, daß** sämtliche Arbeitskreisel (12) an den beiden seitlichen Maschinenbalken (7, 8) angeordnet sind und die Lage der Schwenkachsen (11) der beiden seitlichen Maschinenbalken (7, 8) so gewählt ist, daß ein Abstandsmaß (A) zwischen den inneren Arbeitskreiseln (12) in der Arbeitsstellung sich bei der Überführung der seitlichen Maschinenbalken (7, 8) in die Transportstellung vergrößert.

2. Heuwerbungsmaschine nach Anspruch 1, **dadurch gekennzeichnet, daß** das Abstandsmaß (A) in der Transportstellung 105 bis 150 % des Abstandsmaßes (A) in der Arbeitsstellung beträgt.

3. Heuwerbungsmaschine nach Anspruch 1 oder 2, **dadurch gekennzeichnet, daß** das Abstandsmaß (A) in der Transportstellung 110 bis 130 % des Abstandsmaßes (A) in der Arbeitsstellung beträgt.

4. Heuwerbungsmaschine nach einem der Ansprüche 1 bis 3, **dadurch gekennzeichnet, daß** jeder der in seine Transportstellung um die jeweilige Schwenkachse (11) überführte seitliche Maschinenbalken (7, 8) in um im wesentlichen horizontal ausgerichtete Achsen (9, 10) verschwenkte Teilmaschinenbalken (7.1, 7.2, 7.3, 7.4, 7.5 bzw. 8.1, 8.2, 8.3, 8.4, 8.5) unterteilt ist, an denen jeweils mindestens ein Arbeitskreisel (12) abgestützt ist.

5. Heuwerbungsmaschine nach einem der Ansprüche 1 bis 4, **dadurch gekennzeichnet, daß** sich die Schwenkachsen (11) jeweils im Endbereich eines zentralen Maschinenbalken (6) befinden, an dem Hubausleger zur Überführung der Maschinenbalken (7, 8) in ihre Arbeits- und ihre Transportstellung abgestützt sind.

6. Heuwerbungsmaschine nach einem der Ansprüche 1 bis 5, **dadurch gekennzeichnet, daß** die Stützräder (13) zumindest eines Arbeitskreisels (12) eines Maschinenbalkens (7,8) verschwenkbar mit einer im wesentlichen vertikalen Schwenkachse ausgebildet sind.
